# EUROPEAN PATENT APPLICATION

(11) **EP 4 759 460 A1**
(43) Date of publication of application: **17.06.2026**
(21) Application number: 25742122.2
(22) Date of filing: 08.01.2025
(51) Int. Cl.: B21D 51/26, B21D 19/14, H01M 50/202, H01M 50/224

(54) **ROTARY CAN BEADING APPARATUS**

(30) Priority: 16.01.2024 KR 20240006989
(71) Applicant: LG Energy Solution, Ltd., Seoul 07335 (KR)
(72) Inventor: LEE, Junyoung, Daejeon 34122 (KR); CHO, Haeyoun, Daejeon 34122 (KR); KIM, Taeheon, Daejeon 34122 (KR); KIM, Daehyun, Daejeon 34122 (KR)
(74) Representative: Goddar, Heinz J.
(86) International application number: PCT/KR2025/000425
(87) International publication number: WO 2025/155026

(57) **Abstract**

A rotary can beading apparatus is provided. A spindle of the rotary can beading apparatus comprises: a case having a first hollow part extending in an axial direction; a housing accommodated in the first hollow part to be rotatable with respect to the case and having a second hollow part having a smaller diameter than the case and extending in the axial direction; a shaft which extends in the axial direction while crossing the second hollow part to be slidably movable with respect to the housing in the axial direction, and the axial end of which is connected to a head; and a pair of sleeves inserted into one end and the other end in the axial direction of the second hollow part, respectively, and connected to the housing so that rotation thereof is restricted. The shaft is inserted into the pair of sleeves so that the shaft can slide in the axial direction and relative rotation thereof is restricted.

## Description

### [TECHNICAL FIELD]

This application claims the benefit of priority based on Korean Patent Application No. 10-2024-0006989 filed on January 16, 2024, and entire content disclosed in the document of the patent applications is included as a part of this specification.

The present invention relates to a can beading apparatus, and more particularly, to a rotary can beading apparatus capable of maximally suppressing heat generation from a spindle, facilitating heat dissipation of a shaft, and minimizing bending moment or bending deformation of a shaft such that a thin and long shaft may be applied to a spindle.

### [BACKGROUND ART]

The rotary can beading apparatus is a device that forms a bead at a sidewall member around the open end of a cylindrical can while the can rotates around the rotary. The bead is formed after accommodating an electrode assembly in the can to fix the electrode assembly accommodated in the can.

Recently, as the size of cylindrical batteries is increased, the thickness of the can is also increased, and the depth of beading is also increased. Accordingly, the processing load is greatly increased during the beading process, and the processing time is also increased.

As the processing load and the processing time are increased, various problems occur in the conventional rotary can beading apparatus. Among the problems, the biggest problem is that a lot of heat is generated due to the load in axial direction and rotational load applied to the spindle such that excessive thermal expansion of the spindle shaft resulting in the difference in the height of the head from the set height, thereby expanding the dimensional deviation of the molded product.

In addition, as the processing load increases significantly, it is urgent to secure the rigidity of the cantilever structure of the shaft that slides up and down. However, when the shaft is designed to have a large cross-sectional area in order to secure the rigidity of the shaft, the heat generated around the shaft increases, resulting in increase in the thermal expansion of the shaft.

Therefore, a spindle structure capable of securing the rigidity of the shaft while suppressing the heat generated around the shaft and securing a longer length with respect to the cross-sectional area of the shaft is necessary.

### [DISCLOSURE]

### [TECHNICAL PROBLEM]

In order to solve above-described problems, it is an object of the present invention to provide a spindle structure capable of securing the rigidity of the shaft while suppressing the thermal expansion of the shaft, and a rotary can beading apparatus with the spindle structure applied thereto.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a rotary can beading apparatus including: a rotary configured to rotate about a central axis; a plurality of arms arranged along a circumference of the rotary and extending in radial direction, the plurality of arms being configured to rotate with the rotary; a head rotatably installed about a rotary axis at each of the plurality of arms and slidable in axial direction; a first rail cam having a first height profile extending in circumferential direction with respect to the central axis; and a first cam follower moving up and down together with the head and following the first height profile to adjust the height of the head.

The rotary can beading apparatus may further include: a plurality of can tables arranged along the circumference of the rotary so as to rotate together with the rotary and extending in radial direction; a can support provided at an outer circumference of each of the plurality of can tables so as to rotate together with the plurality of can tables and installed rotatably about the rotary axis with respect to the plurality of can tables; a second rail cam having a second height profile extending in circumferential direction with respect to the central axis; and a second cam follower moving up and down together with the can support and following the second height profile to adjust the height of the can support.

The rotary can beading apparatus may further include: a beading knife installed at each of the plurality of arms so as to be movable toward or away from the rotary axis; a third rail cam having a first radial direction profile extending in circumferential direction with respect to the central axis; and a third cam follower moving in radial direction with respect to the rotary axis together with the beading knife and following the first radial direction profile to adjust a radial distance of the beading knife with respect to the rotary axis of the head.

The rotary can beading apparatus may further include: a support roller disposed opposite the beading knife with the rotary axis interposed therebetween; a fourth rail cam having a second radial direction profile extending in circumferential direction with respect to the central axis; and a fourth cam follower moving in radial direction with respect to the rotary axis together with the support roller and following the second radial direction profile to adjust a radial distance of the support roller with respect to the rotary axis of the head.

The rotary can beading apparatus may include a first rail extending in circumferential direction with respect to the central axis, and a first roller moving up and down together with the head and following the first rail.

The height of the head in a first circumferential section may be determined by the first rail cam.

The height of the head in a second circumferential section that does not overlap with the first circumferential section may be determined by the first rail.

The rotary can beading apparatus may include a second rail extending in circumferential direction with respect to the central axis, and a second roller moving up and down together with the can support and following the second rail.

The height of the can table in a third circumferential section may be determined by the second rail cam. The height of the can table in a fourth circumferential section that does not overlap with the third circumferential section may be determined by the first rail.

A spindle may be rotatably installed at each of the plurality of arms and be configured to rotate about a rotary axis.

The spindle includes a case provided with a first hollow portion extending axially. The case may be fixed to the arm.

The spindle includes a housing accommodated in the first hollow portion to be configured to be rotatable with respect to the case, provided with a second hollow portion extending axially, and having a smaller diameter than the case.

The spindle includes a shaft extending axially across the second hollow portion to be axially slidable with respect to the housing and having an axial end connected to the head.

The head may be configured to rotate by receiving a rotational force from the spindle, and may move in an axial direction by the shaft.

A bearing may be interposed between the case and the housing to support a rotation of the housing with respect to the case.

The bearing may be arranged between the case and the housing in a radial direction.

The bearing may be accommodated in the first hollow portion with the outer circumference thereof in contact with the inner circumference of the case and the inner circumference thereof in contact with the outer circumference of the housing.

A plurality of bearings may be arranged to be axially spaced apart from each other.

In order to solve above-described problems, a pair of sleeves are inserted in a first axial end and a second axial end of the second hollow portion, respectively, according to the present invention. The shaft is inserted in the pair of sleeves to be axially slidable while rotatably constrained to the pair of sleeves.

Then, since the pair of the sleeves are arranged at the two axial ends of the second hollow portion, respectively, the maximum axial distance between the support points of the pair of the sleeves for the shaft may be secured.

The pair of sleeves may be axially spaced apart from each other.

Then, since the shaft is exposed through the second hollow portion between the pair of the sleeves, the cooling efficiency of the shaft may be increased. When relative movement occurs in the axial direction between the sleeve and the shaft rotating at high speed, frictional heat is generated between the sleeve and the shaft. When the two sleeves are arranged to be spaced apart from each other, the frictional area between the sleeve and the shaft may be reduced, which not only reduces the generation of frictional heat, but also secures a path for the shaft requiring reliable cooling to directly release heat in radial direction without going through the sleeve.

The distance between the inner axial ends of the pair of sleeves may be 1/6 to 1/3 of the distance between the outer axial ends of the pair of sleeves. When the ratio is less than 1/6, the cooling efficiency of the shaft is degraded without increasing the effect of the sleeve supporting the bending deformation of the shaft. When the above ratio is greater than 1/3, the effect of the sleeve supporting the bending deformation of the shaft is degraded without increasing the cooling efficiency of the shaft.

The ratio of axial lengths of the pair of sleeves may be 0.9 to 1.1. That is, the axial length of one sleeve may be set to be less than 10% longer or less than 10% shorter than that of the other sleeve. Accordingly, a large bending moment may be prevented from occurring in the thin and long sleeve.

The distance between the inner axial ends of the pair of sleeves may be 1.0 to 2.0 times the average diameter of the shaft. The average diameter of the shaft refers to the diameter of a circle having an area substantially equal to the cross-sectional area of the inner region defined by the outer circumferential surface of the shaft. When the ratio is less than 1.0, the cooling efficiency of the shaft is degraded without increasing the effect of the sleeve supporting the bending deformation of the shaft. When the ratio exceeds 2.0, the effect of the sleeve supporting the bending deformation of the shaft is degraded without increasing the cooling efficiency of the shaft.

By minimizing such bending deformation or bending moment, vibration of the sleeve rotating at high speed may be prevented.

The axial section of each of the sleeves in contact with an inner circumference of the housing may at least partly overlap with the axial section of the bearing in contact with the outer circumference of the housing.

Accordingly, the sleeve is reliably supported by the bearing so as not to be eccentric in radial direction such that vibration of the sleeve rotating at high speed may be prevented.

At least a portion of the axial section where each of the plurality of bearings is in contact with the outer circumference of the housing may be disposed beyond the axial section between the pair of sleeves.

Accordingly, it is possible to make the side wall of the housing thin.

When the axial section of the bearing in contact with the outer circumference of the housing is placed entirely within the axial section between the pair of sleeves, there is a risk of deformation of the housing in the corresponding section. Thus, it is necessary to increase the rigidity of the housing, which may increase the volume and mass of the rotating body and cause an increase in the amount of heat generated.

At least a portion of the axial section between the pair of sleeves may not overlap with the axial section where each of the bearing is in contact with the outer circumference of the housing.

Then, the second hollow portion in the housing faces the first hollow portion of the case in radial direction with the side wall of the housing therebetween. Accordingly, the heat emitted by the shaft in the space between the pair of sleeves may be discharged out of the housing through the side wall of the housing.

The case may be provided with a through-hole connecting the first hollow portion to a space outside the housing.

The through-hole may be provided between two adjacent bearings in an axial direction.

The rotary can beading apparatus may force a gas flow between the first hollow portion and outside the case through the through-hole. Accordingly, the cooling efficiency of the shaft may be greatly increased.

A shaft hole extending through the shaft in an axial direction may be provided at the center of the shaft. When a thin and long shaft hole is provided in the center of the shaft, a cooling passage may be secured without significantly reducing the bending rigidity of the shaft.

The rotary can beading apparatus may force a gas flow in an axial direction through the shaft hole.

### [ADVANTAGEOUS EFFECTS]

According to the present invention, by applying a pair of spaced-apart sleeves, the friction area between the shaft and the sleeve may be reduced proportional to the distance between the pair of sleeves compared to a single long sleeve while minimizing the increase in the bending moment applied to the shaft, thereby further reducing the cross-sectional area of the shaft. As a result, the contact area between the sleeve and the shaft may be further reduced, thereby further reducing the friction area between the shaft and the sleeve. In addition, since the sleeve is not present in the section between the sleeves, and the shaft is exposed to the second hollow portion, the cooling efficiency of the shaft may be increased.

According to the present invention, through the arrangement of a pair of sleeves spaced apart in axial direction and a plurality of bearings spaced apart in axial direction, the required rigidity of the housing may be reduced, and the cooling efficiency of the shaft may be further increased by the space between the pair of sleeves in contact with the first hollow portion of the case through the side wall of the housing.

According to the present invention, the rigidity of the shaft may be secured while reducing the amount of heat generated and promoting heat dissipation from the shaft, thereby improving the production quality of can beading process.

In addition to the advantageous effects described above, specific effects of the present invention will be described further while describing specific details of the present invention.

### [BRIEF DESCRIPTION OF DRAWINGS]

FIGS. 1 and 2 are a perspective view as viewed from above and a front view of the rotary can beading apparatus, respectively, according to an embodiment of the present invention.
FIG. 3 is a perspective view of the rotary can beading apparatus of FIG. 1 without an upper frame as viewed from above.
FIG. 4 is a perspective view of an upper frame of the rotary can beading device of FIG. 1 as viewed from below.
FIG. 5 is a perspective view of the rotary can beading apparatus of FIG. 1 without a lower frame as viewed from below.
FIG. 6 is a perspective view of a lower frame of the rotary can beading apparatus of FIG. 1 as viewed from above.
FIG. 7 is a perspective view of a lower frame and a rotary of the rotary can beading apparatus of FIG. 1 as viewed from above.
FIG. 8 is a front cross-sectional view of an upper frame, a lower frame and a rotary.
FIG. 9 is a front cross-sectional view of the rotary can beading apparatus with a can supplied thereto.
FIG. 10 is a front cross-sectional view of the rotary can beading apparatus with a can being subjected to a beading process.
FIG. 11 is an enlarged cross-sectional view of a head, a knife and a support roller of the rotary can beading apparatus according to the embodiment of the present invention.
FIG. 12 is a cross-sectional perspective view of a spindle.
FIG. 13 is a cross-sectional perspective view of the spindle of FIG. 12 without a shaft thereof.
FIG. 14 is an exploded perspective view of a spindle.
FIG. 15 is a lateral cross-sectional view of a spindle.
FIG. 16 is a perspective view of the upper and lower portions of a spindle with a shaft support member and a head installed thereon, respectively.
FIG. 17 is a cross-sectional view of the spindle of FIG. 16 taken along the line XVII-XVII.

### [DESCRIPTION OF REFERENCE NUMERALS]

| | | | |
|---|---|---|---|
| 1: | rotary can beading apparatus | 2: | can |
| 10: | rotary | 101: | central axis |
| 12: | outer rotary | 121: | table lifting guide |
| 14: | inner rotary | 141: | spindle drive support |
| 143: | spindle drive | 145: | drive motor |
| 147: | drive gear | 16: | support rotary |
| 17: | knife rail cam (third rail cam) | 172: | knife radial position profile |
| 20: | arm | 21: | spindle support |
| 22: | bearing | 23: | shaft lifting guide |
| 24: | shaft support member | 242: | chamber |
| 243: | suction hole | 30: | spindle |
| 300: | case | 302: | first hollow portion |
| 307: | through-hole | 301: | rotary axis |
| 31: | housing | 310: | second hollow portion |
| 32: | driven gear | 33: | sleeve |
| 34: | shaft | 341: | shaft hole |
| 35: | head cam follower (first cam follower) | | 37: head |
| 39: | head roller (first roller) | 40: | beading knife |
| 41: | knife support | 42: | knife support axis |
| 43: | knife cam follower (third cam follower) | 50: | support roller |
| 51: | roller support | 52: | roller support axis |
| 53: | support cam follower (fourth cam follower) | 60: | can table |
| 61: | can support | 62: | can cam follower (second cam follower) |
| 63: | can roller (second roller) | 70: | upper frame (first frame) |
| 71: | upper rail cam (first rail cam) | 77: | upper rail (first rail) |
| 80: | lower frame (second frame) | 81: | lower rail cam (second rail cam) |
| 85: | lower rail (second rail) | 86: | middle table |
| 87: | support rail cam (fourth rail cam) | 871: | support roller radial position profile |

### [DETAILED DESCRIPTION OF THE INVENTION]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of' are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a rotary can beading apparatus 1 according to an embodiment of the present invention will be described.

In order to facilitate description, a central axis 101 is the center of rotation of the rotary 10, and a rotary axis 301 is the center of rotation of the head 37 orbiting around the rotary 10.

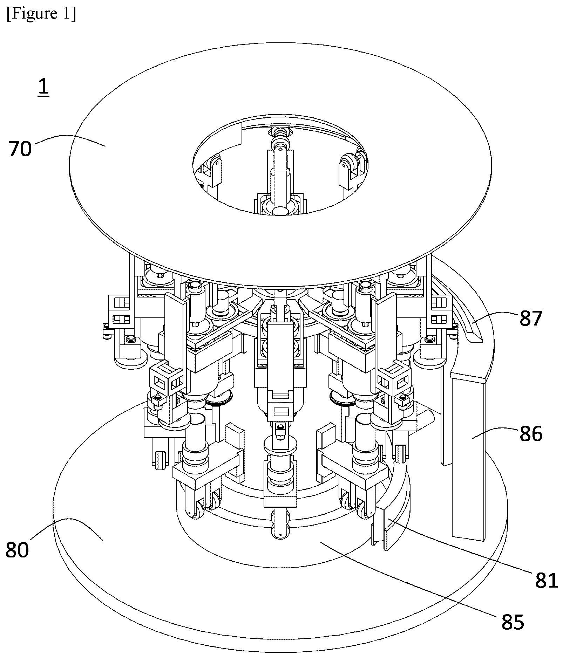

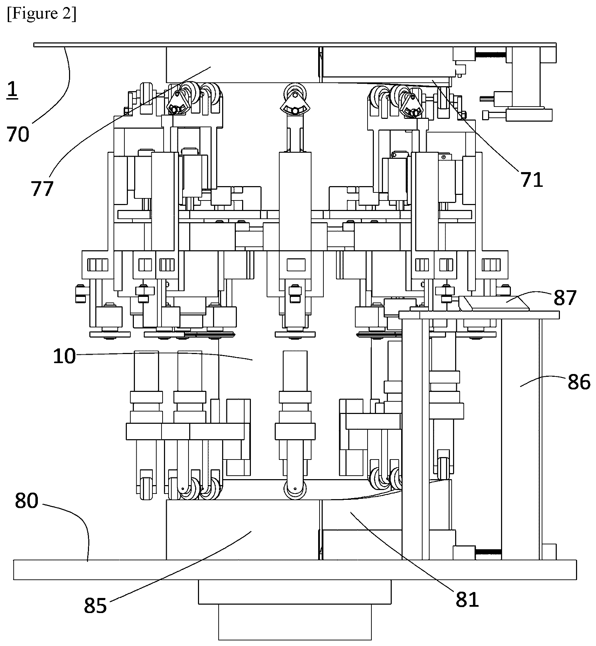

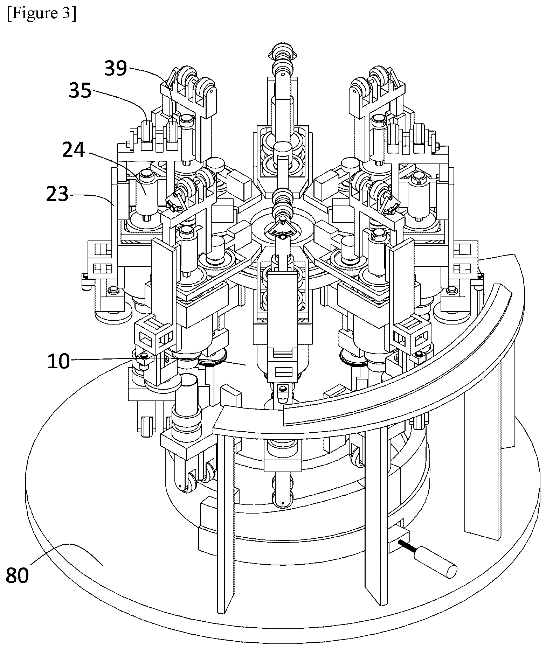

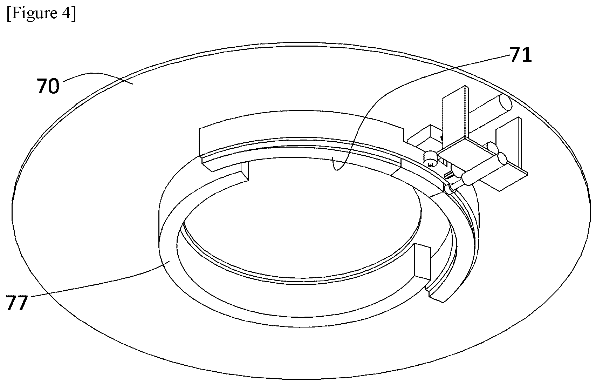

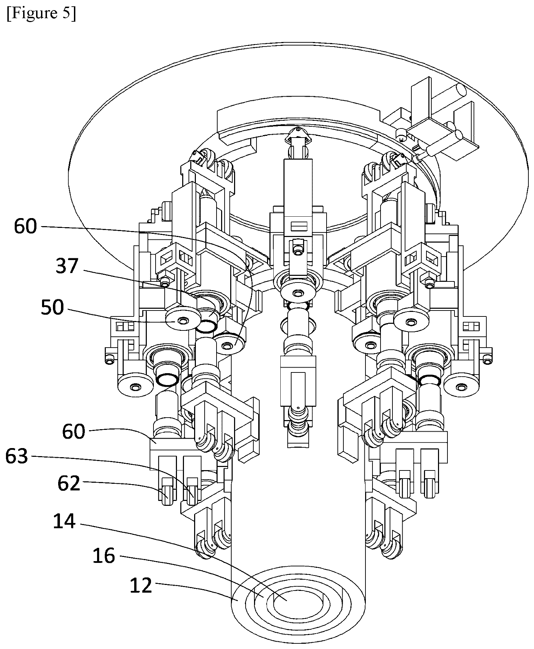

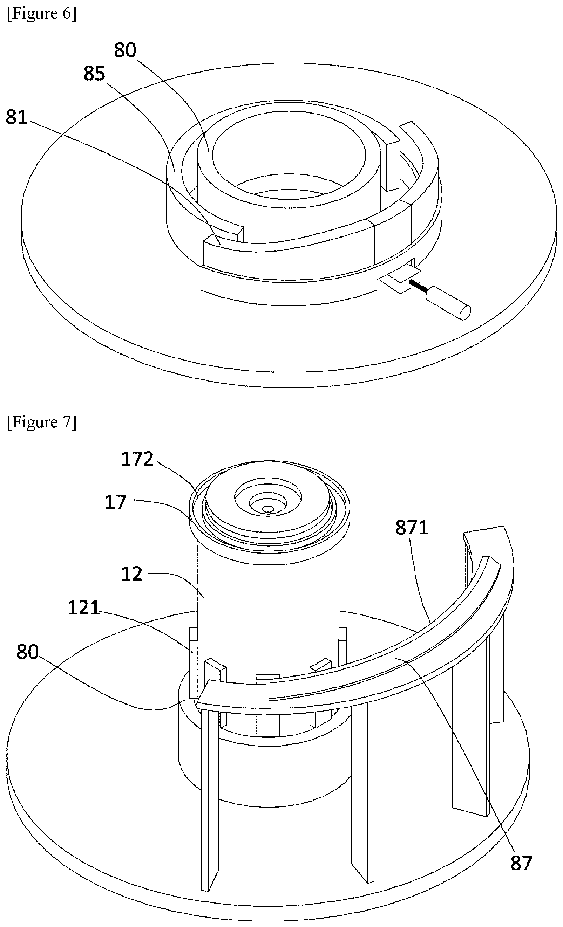

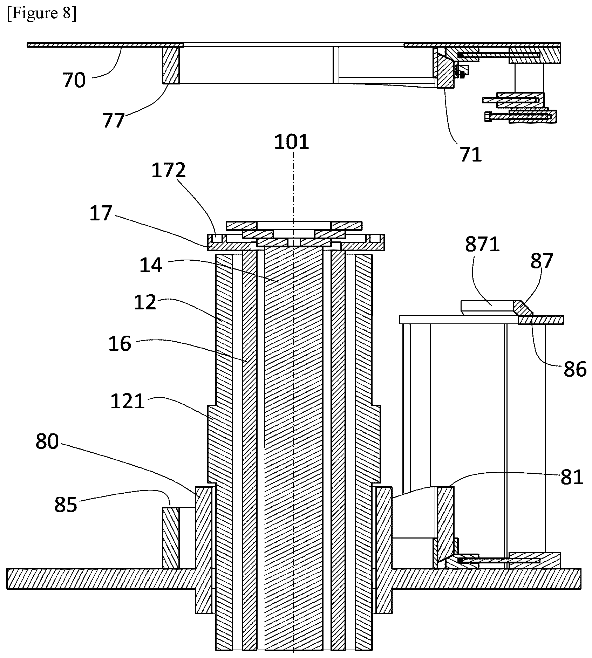

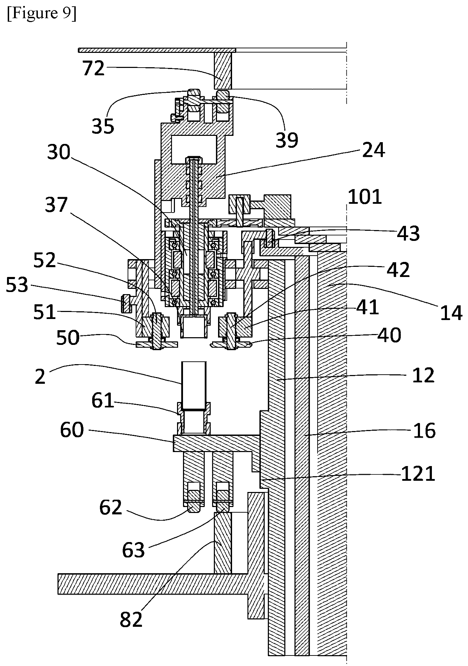

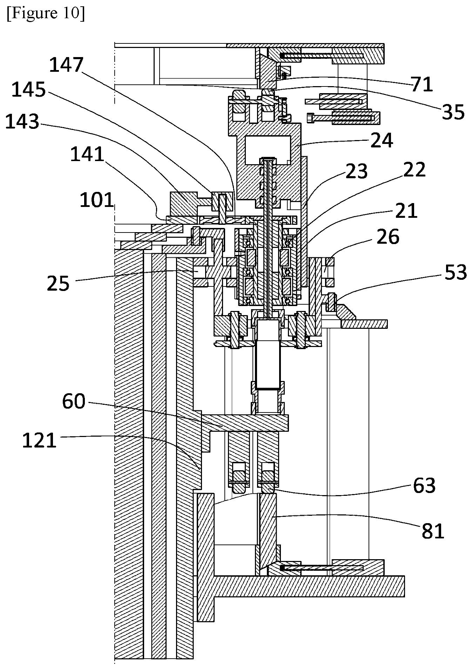

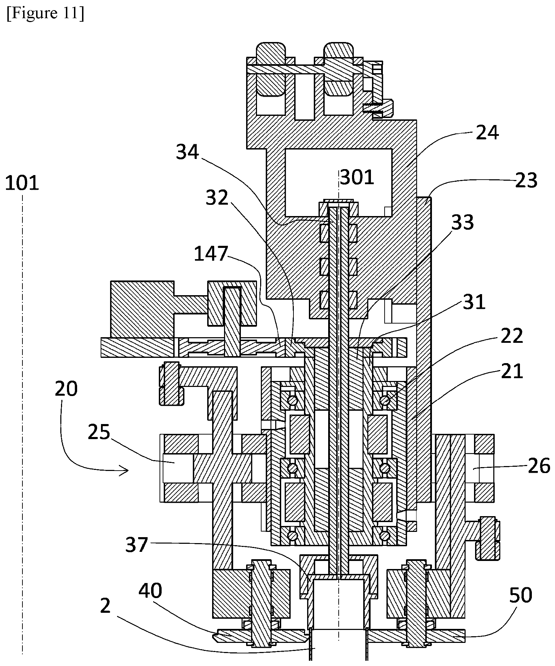

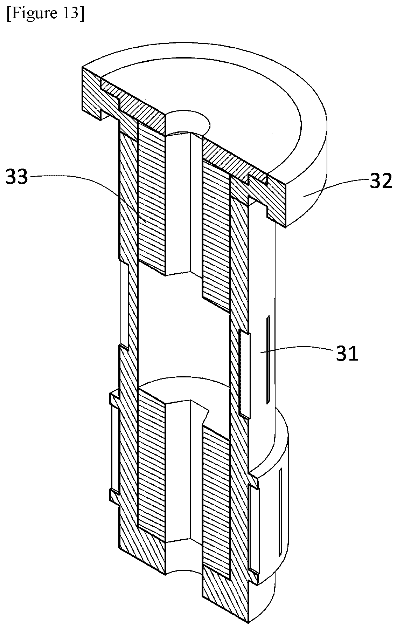

With reference to FIGS. 1 to 13, the overall structure will be described. The rotary can beading apparatus 1 includes the rotary 10 that rotates about the central axis 101.

The rotary 10 includes an outer rotary 12 and an inner rotary 14 that are concentric, and a support rotary 16 provided therebetween in radial direction. The outer rotary 12 and the inner rotary 14 may rotate at the same speed.

A lower frame 80 is installed around the lower portion of the rotary 10 to support the rotation of the rotary 10. The lower frame 80 and the support rotary 16 are firmly fixed so as to support the rotation of the outer rotary 12 and the inner rotary 14.

The rotary can beading apparatus 1 includes a plurality of arms 20 extending in radial direction and arranged along the circumference of the rotary 10 and so as to rotate together with the rotary 10. According to the embodiment, eight arms 20 installed at the outer rotary 12 at equal intervals along the circumferential direction are exemplified.

A spindle support 21 is provided at the arm 20. The spindle support 21 rotatably supports the spindle 30 through a bearing 22. The spindle 30 is rotatably installed at the spindle support 21 around the rotary axis 301.

The spindle 30 includes a cylindrical housing 31 extending vertically, a sleeve 33 inserted in the housing 31, and a shaft 34 extending vertically and inserted in the sleeve 33.

The housing 31 and the sleeve 33 are fixed as a single body to rotate together. The shaft 34 is rotationally constrained to the sleeve 33 and rotates together with the sleeve 33. The shaft 34 is inserted to be axially slidable relative to the sleeve 33. According to the embodiment, the shaft 34 having a substantially regular hexagonal cross-section and the sleeve 33 provided with a hole corresponding to the shape of the shaft 34 exemplified, which allows the shaft 34 and the sleeve 33 to be mutually rotationally constrained while enabling the shaft 34 to be axially slidable.

A head 37 is connected to the lower end portion of the shaft 34. The head 37 is connected to the shaft 34 to rotate and move up and down together with the shaft 34. The head 37 supports the open end provided at the upper end portion of the sidewall member of the can 2, transmits rotational force to the can 2, and rotates together with the can 2.

An upper frame 70 is provided above the rotary 10. The upper frame 70 is firmly fixed. An upper rail cam 71 having a head height profile extending in circumferential direction with respect to the central axis 101 of the rotary 10 is installed under the upper frame 70.

A shaft support member 24 is installed at the upper end portion of the shaft 34 to rotatably support the shaft 34 while constraining the shaft 34 in axial direction of the shaft 34.

A shaft lifting guide 23 is installed at the arm 20 to guide and support the lifting of the shaft support member 24. The shaft support member 24 may be moved up and down along the shaft lifting guide 23, and accordingly, the shaft 34 may also be moved up and down together.

At the upper portion of the shaft support member 24, a head cam follower 35 is installed to be moved up and down together with the shaft 34 of the spindle 30. The head cam follower 35 revolves around the central axis 101 of the rotary 10 and follows the head height profile, and accordingly, the shaft 34 and the head 37 connected to the lower end portion of the shaft 34 are moved up and down together.

An upper rail 77 extending in circumferential direction with respect to the central axis 101 is further installed under the upper frame 70. In addition, a head roller 39 moving up and down together with the shaft 34 of the spindle 30 and following the upper rail 77 is further installed above the shaft support member 24.

The upper rail 77 and the upper rail cam 71 are provided at radially different positions of the central axis 101. According to the embodiment, the upper rail 77 disposed radially inner than the upper rail cam 71 is exemplified.

Similarly, the head roller 39 and the head cam follower 35 are provided at radially different positions of the central axis 101. According to the embodiment, the head roller 39 disposed radially inner than the head cam follower 35 is exemplified.

In the head lift section along circumferential direction, the height of the head 37 is determined by the upper rail cam 71, and in the head travel section that does not overlap with the head lift section along circumferential direction, the height of the head 37 is determined by the upper rail 77.

For example, in the head lift section, the head cam follower 35 is in contact with the upper rail cam 71 and reflects the head height profile to the height of the head 37, and in the head travel section, the head roller 39 is in contact with the upper rail 77 and maintains the height of the head 37 constant.

The rotary can beading apparatus 1 includes a plurality of can tables 60 extending in radial direction and arranged along the circumference of the rotary 10 and so as to rotate together with the rotary 10. According to the embodiment, eight can tables 60 installed at the outer rotary 12 at equal intervals along the circumferential direction are exemplified.

The outer circumference of the outer rotary 12 is provided with a table lifting guide 121 extending vertically, and the eight can tables 60 are guided to move up and down along the table lifting guide 121.

A can support 61 is provided at the radial edge of the can table 60 so as to rotate with the can table 60 about the central axis 101.

The can support 61 is aligned with the head 37 vertically. The can support 61 is installed to freely rotate with respect to the can table 60 about the rotary axis 301 of the head 37. The can support 61 rotates in response to the rotational force of the head 37.

A lower rail cam 81 is installed at the lower frame 80. The lower rail cam 81 has a can height profile that extends in circumferential direction with respect to the central axis 101 of the rotary 10.

A can cam follower 62 moving up and down together with the can table 60 is installed under the can table 60. The can cam follower 62 revolves around the central axis 101 of the rotary 10 and follows the can height profile, and accordingly, the can table 60 moved up and down together, thereby adjusting the height of the can support 61.

A lower rail 85 extending in circumferential direction with respect to the central axis 101 is further installed at the lower frame 80. In addition, a can roller 63 moving up and down together with the can table 60 and following the lower rail 85 is further installed under the can table 60.

The lower rail 85 and the lower rail cam 81 are provided at radially different positions of the central axis 101. According to the embodiment, the lower rail 85 disposed radially inner than the lower rail cam 81 is exemplified.

Similarly, the can roller 63 and the can cam follower 62 are provided at radially different positions of the central axis 101. According to the embodiment, the can roller 63 disposed radially inner than the can cam follower 62 is exemplified.

In the can lifting section along circumferential direction, the height of the can table 60 may be determined by the lower rail cam 81, and in the can travel section that does not overlap with the can lifting section along circumferential direction, the height of the can table 60 is determined by the upper rail 77.

For example, in the can lifting section, the can cam follower 62 is in contact with the lower rail cam 81 and reflects the can height profile to the height of the can support 61, and in the can travel section, the can roller 63 is in contact with the lower rail 85 and maintains the height of the can support 61 constant.

The rotary can beading apparatus 1 includes a beading knife 40 installed at each of the arms 20.

The beading knife 40 is rotatably supported by a knife support axis 42 installed at the knife support 41. The beading knife 40 is extrapolated to the knife support axis 42 so that relative movement in axial direction is constrained while relative rotation is allowed with respect to the knife support axis 42.

The arm 20 supports the knife support 41 so that the knife support 41 may move toward or away from the rotary axis 301 of the head 37. According to the embodiment, the knife movement guide 25 provided at the arm 20 supporting the knife support 41 to slide in radial direction of the rotary axis 301 is exemplified. The knife movement guide 25 is provided at the arm 20 inner than the spindle support 21 in radial direction of the central axis 101.

A knife rail cam 17 having a knife radial position profile 172 and extending in circumferential direction with respect to the central axis 101 is installed above the support rotary 16. For example, the knife radial position profile 172 may have a trajectory of a circle eccentrically arranged with respect to the central axis 101.

The knife movement guide 25 is provided at the arm 20 outer than the knife rail cam 17 in radial direction of the central axis 101.

A knife cam follower 43 moving in radial direction with respect to the rotary axis 301 together with the beading knife 40 and following the knife radial position profile 172 for adjusting the radial distance of the beading knife 40 with respect to the rotary axis 301 of the spindle 30 is installed at the knife support 41,.

The rotary can beading apparatus 1 includes a support roller 50 installed at each of the arms 20 to face the beading knife 40 with the rotary axis 301 therebetween.

The support roller 50 is rotatably supported by a roller support axis 52 installed at the roller support 51. The support roller 50 is extrapolated to the roller support axis 52 so that relative movement in axial direction with respect to the roller support axis 52 is constrained while relative rotation is allowed.

The arm 20 supports the roller support 51 so that the roller support 51 may move toward or away from the rotary axis 301 of the head 37. According to the embodiment, the arm 20 provided with a roller movement guide 26 supporting the roller support 51 allowing the roller support 51 to slide in radial direction of the rotary axis 301 is exemplified. The roller movement guide 26 is provided at the arm 20 outer than the spindle support 21 in radial direction of the central axis 101. For reference, the shaft lifting guide 23 is provided between the spindle support 21 and the roller movement guide 26 in radial direction.

The lower frame 80 is provided with a middle table 86 extending to a height equal to the head 37 at a position outer than the head 37 with respect to the central axis 101.

A support rail cam 87 having a support roller radial position profile 871 extending in circumferential direction with respect to the central axis 101 is installed on the middle table 86. For example, the support roller radial position profile 871 may have an arc-shaped trajectory eccentrically arranged with respect to the central axis 101.

The roller movement guide 26 is provided at the arm 20 inner than the support rail cam 87 in radial direction of the central axis 101.

A support cam follower 53 moving in radial direction with respect to the rotary axis 301 together with the support roller 50 and following the support roller radial position profile 871 to adjust the radial distance of the support roller 50 with respect to the rotary axis 301 of the spindle 30 is installed at the roller support 51.

The rotary can beading apparatus 1 includes a plurality of spindle drive supports 141 extending in radial direction and arranged along the circumference of the rotary 10 to rotate together with the rotary 10. According to the embodiment, eight spindle drive supports 141 installed above the inner rotary 14 at equal intervals along the circumferential direction are exemplified. The spindle drive support 141 is aligned with the arm 20 in radial direction of the central axis 101.

A spindle drive 143 is installed on the spindle drive support 141. The spindle drive 143 is disposed radially inner than the spindle 30 with respect to the central axis 101.

The spindle drive 143 includes: a drive motor 145 generating a rotational force; and a drive gear 147 rotated by the drive motor 145. The rotation axis of the drive gear 147 is arranged parallel to the rotation axis of the spindle 30. A driven gear 32 engaged with the drive gear 147 is provided on the housing 31 of the spindle 30 to rotate together with the housing 31. The spindle drive 143 rotates the spindle 30 in a section where rotation of the spindle 30 is required in circumferential direction of the rotary 10.

The spindle 30 includes a case 300 fixedly installed at the spindle support 21. The case 300 is cylindrical and provided with a first hollow portion 302 with open upper end. The first hollow portion 302 extends axially.

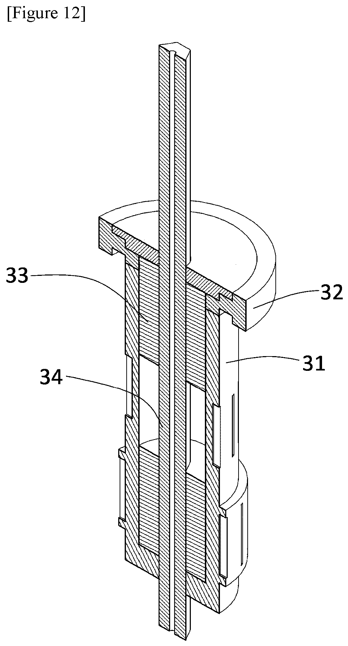

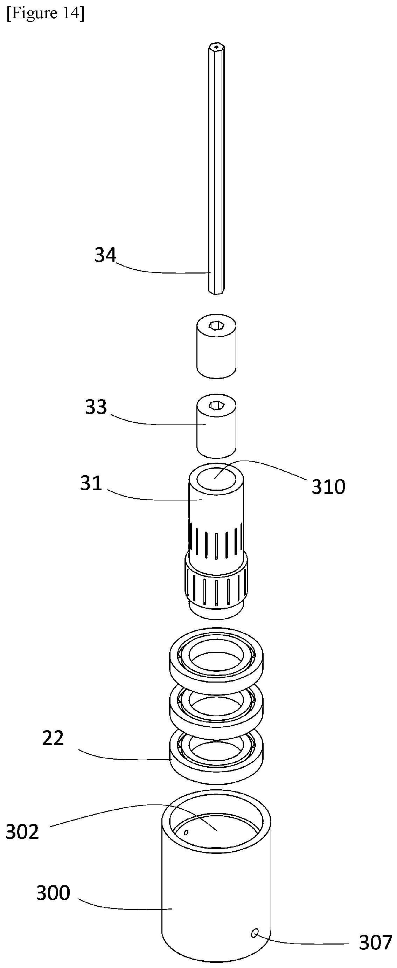

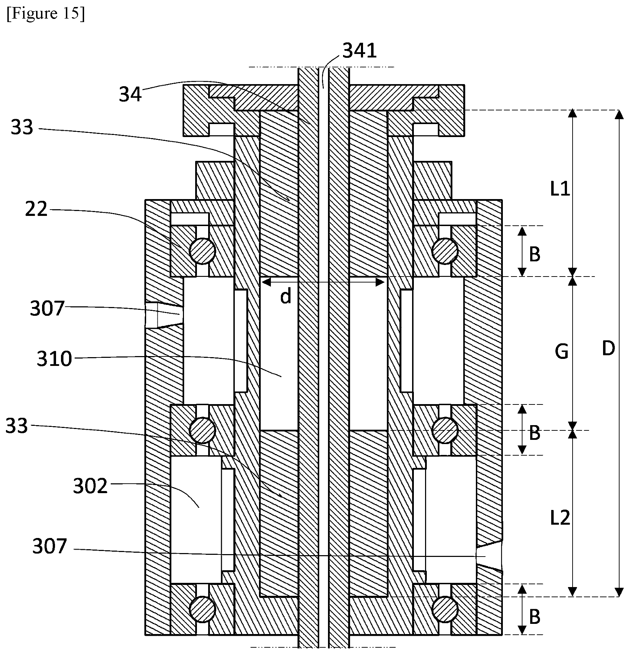

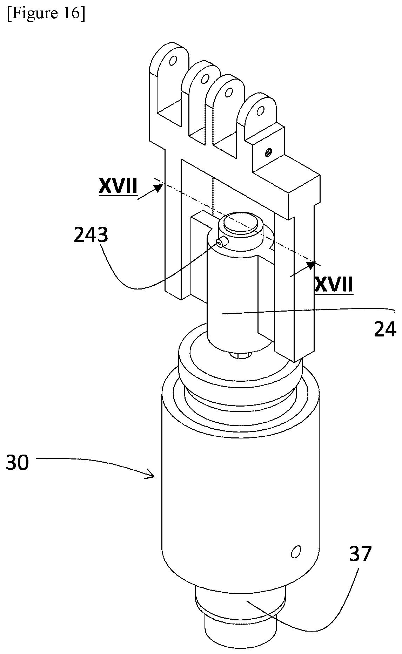

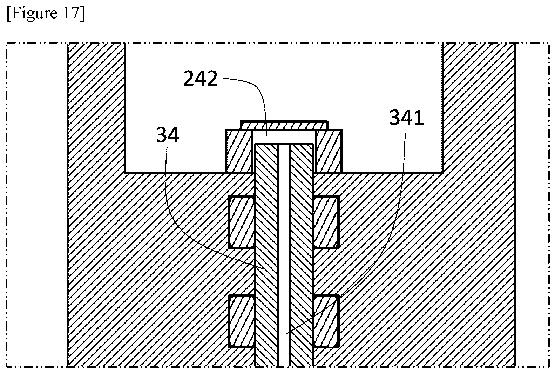

Referring to FIGS. 12 to 17, the housing 31 is rotatably accommodated in the first hollow portion 302 with respect to the case 300. The outer diameter of the housing 31 is smaller than the inner diameter of the case 300. The housing 31 has a second hollow portion 310 extending axially.

The sleeve 33 is press-fitted into the second hollow portion 310 of the housing 31 as a single body. That is, the housing 31 and the sleeve 33 are axially and mutually constrained and circumferentially and mutually constrained. A pair of sleeves 33 are disposed at the upper and lower end portions of the second hollow portion 310, respectively.

The shaft 34 is installed to be rotationally constrained to the sleeve 33 while being axially slidable with respect to the sleeve 33. Accordingly, the shaft 34 axially extends across the second hollow portion 310 to be rotationally constrained to the housing 31 but axially slidable with respect to the housing 31.

Between the case 300 and the housing 31, a bearing 22 is interposed to support the rotation of the housing 31 with respect to the case 300.

The bearing 22 is accommodated in the first hollow portion 302.

The bearing 22 is disposed between the case 300 and the housing 31 to support the case 300 radially.

The bearing 22 may be accommodated in the first hollow portion 302 with the outer circumference thereof in contact with the inner circumference of the case 300 and the inner circumference thereof in contact with the outer circumference of the housing 31.

A plurality of bearings 22 may be provided axially spaced apart from each other. According to the embodiment, three bearings 22 spaced apart from one another are exemplified.

The pair of sleeves 33 are inserted in the first axial end and the second axial end of the second hollow portion 310 of the housing 31, respectively. The lower end of the sleeve 33 inserted in the first axial end is in contact with the bottom of the housing 31, and the upper end of the sleeve 33 inserted in the second axial end may be at the same height as the upper end portion of the housing 31, or may protrude further upward than the upper end portion of the housing as in the embodiment.

Since the pair of the sleeves 33 are arranged as far as possible from each other at the two axial ends of the second hollow portion 310 of the housing 31, the maximum axial distance of the support point of the sleeve 33 for the shaft 34 may be secured.

The pair of the sleeves 33 are disposed axially spaced apart from each other. As a result, the shaft 34 is exposed to the space of the second hollow portion 310 between the pair of the sleeves 33.

When relative movement in axial direction occurs between the sleeve 33 and the shaft 34 rotating at high speed, frictional heat is generated between the sleeve 33 and the shaft 34. Such frictional heat increases approximately in proportion to the contact area between the sleeve 33 and the shaft 34.

When the two sleeves 33 are disposed spaced apart from each other as in the embodiment, the frictional area between the sleeve and the shaft may be reduced, thereby reducing the generation of frictional heat. In addition, in the section where the shaft 34 is exposed, the shaft 34 may directly release heat in radial direction without going through the sleeve.

The distance G between the inner axial ends of the pair of sleeves 33 is set to be 1/6 to 1/3 of the distance D between the outer axial ends of the pair of sleeves. When the ratio is less than 1/6, the cooling efficiency of the shaft is degraded without increasing the effect of the sleeve supporting the bending deformation of the shaft. When the above ratio is greater than 1/3, the effect of the sleeve supporting the bending deformation of the shaft is degraded without increasing the cooling efficiency of the shaft.

The ratio L1/L2 of the axial lengths of the pair of sleeves 33 may be 0.9 to 1.1. That is, the axial length of one sleeve 33 may be set to be less than 10% longer or less than 10% shorter than that of the other sleeve 33. Accordingly, a large bending moment may be prevented from occurring in the thin and long sleeve 33.

Considering the point where the head 37 is connected, the axial length L2 of one of the pair of sleeves 33 disposed in the lower portion of the housing 31 may be equal to or longer than the axial length L1 of the other sleeve 33 of the pair of sleeves 33 disposed in the upper portion of the housing 31.

The distance G may be 1.0 to 2.0 times the average diameter d of the shaft 34. The average diameter of the shaft refers to the diameter of a circle having an area substantially equal to the cross-sectional area of the inner region defined by the outer circumferential surface of the shaft.

When the ratio is less than 1.0, the cooling efficiency of the shaft is degraded without increasing the effect of the sleeve supporting the bending deformation of the shaft. When the ratio exceeds 2.0, the effect of the sleeve supporting the bending deformation of the shaft is degraded without increasing the cooling efficiency of the shaft.

As described above, according to the embodiment, the vibration of the sleeve 33 rotating at high speed is suppressed and the amount of heat generated is reduced while improving the cooling effect of the shaft 34 by separating the pair of sleeves 33 from each other in axial direction to minimize the bending deformation or bending moment.

Meanwhile, the axial sections L1 and L2 of the sleeves 33 in contact with the inner circumference of the housing 31, respectively, overlap at least partly with the axial sections B where the bearings 22 are in contact with the outer circumference of the housing.

As a result, the sleeve 33 is reliably supported by the bearings 22 so as not to be eccentric in radial direction, thereby preventing the vibration of the sleeve 33 rotating at high speed.

At least a portion of the axial sections B where the bearings 22 are in contact with the outer circumference of the housing 31 may be disposed out of the axial section G between the pair of sleeves 33.

When the axial section B of the bearing 22 in contact with the outer circumference of the housing 31 is placed entirely within the axial section G between the pair of sleeves 33, there is a risk of deformation of the housing 31 in the corresponding section. Thus, it is necessary to increase the rigidity of the housing 31, which may increase the volume and mass of the rotating body and cause an increase in the amount of heat generated.

However, as in the embodiment, when at least the portion of the axial sections B where the bearings 22 are in contact with the outer circumference of the housing 31 is disposed out of the section G, it is possible to make the side wall of the housing 31 thin.

In addition, at least a portion of the axial section G does not overlap with the axial section B where each of the bearing is in contact with the outer circumference of the housing.

Then, the second hollow portion 310 in the housing 31 faces the first hollow portion 302 of the case 300 in radial direction with the side wall of the housing 31 therebetween. Accordingly, the heat emitted by the shaft 34 in the space G between the pair of sleeves may be discharged out of the housing through the side wall of the housing.

Meanwhile, at least one through-hole 307 is provided in the case 300. The through-hole 307 serves as a passage connecting the first hollow portion 302 of the case 300 to the outside thereof. According to the embodiment, the through-holes 307 provided at the upper and lower portions of the side wall of the case 300, respectively, are exemplified. The through-hole 307 is provided in the case 300 between two axially adjacent bearings 22.

Through the through-hole 307, suction may be performed to discharge air in the first hollow portion 302 out of the first hollow portion 302, or blowing may be performed to introduce external air into the first hollow portion 302. When there are two or more through-holes 307, suction may be performed for some through-hole 307, and blowing may be performed for some through-hole 307.

When the air in the first hollow portion 302 is discharged out of the first hollow portion 302 through the through-hole 307, high temperature air in the first hollow portion 302 is suctioned out, air flow occurs in the internal gap of the spindle 30, and low temperature air may be introduced into the spindle 30 and fill the first hollow portion 302.

When external air is introduced into the first hollow portion 302 through the through-hole 307, air flow occurs in the internal gap of the spindle 30, and high temperature air may be quickly discharged to the outside.

Meanwhile, the shaft 34 has a hollow structure. That is, a shaft hole 341 extending through the shaft 34 along axial direction may be provided in the center of the shaft 34. The shaft 34 is perforated by the shaft hole 341 in axial direction. When a thin and long shaft hole 341 is provided in the center of the shaft 34, a cooling passage may be secured without significantly reducing the bending rigidity of the shaft 34.

When gas is forced to flow through the shaft hole 341, the shaft 34 may be directly and quickly cooled.

The forced gas flow structure may be embodied in the shaft support member 24 that rotatably supports the upper end portion of the shaft 34.

In order to achieve this, the shaft support member 24 includes a chamber 242 where the upper end portion of the shaft 34 is exposed. The upper end portion of the shaft hole 341 is exposed so as to communicate with the chamber 242.

In addition, in order to communicate with the chamber 242, a suction hole 243 is installed in the shaft support member 24. When the gas in the chamber 242 is suctioned out of or external air is supplied to the chamber 242 through the suction hole, the supplied air flows in axial direction along the shaft hole 341 and cools the shaft 34.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A rotary can beading apparatus, comprising:
a rotary configured to rotate about a central axis;
a plurality of arms arranged along a circumference of the rotary and extending in a radial direction, the plurality of arms being configured to rotate with the rotary;
a spindle rotatably installed at each of the plurality of arms and configured to rotate about a rotary axis; and
a head configured to rotate by receiving a rotational force from the spindle,
wherein the spindle comprises:
a case provided with a first hollow portion extending axially;
a housing accommodated in the first hollow portion to be rotatable with respect to the case, the housing having a smaller diameter than the case and being provided with a second hollow portion extending axially;
a shaft extending axially across the second hollow portion to be axially slidable with respect to the housing, the shaft having an axial end connected to the head; and
a pair of sleeves inserted in a first axial end and a second axial end of the second hollow portion, respectively, the pair of sleeves being rotatably constrained to the housing, and
wherein the shaft is inserted in the pair of sleeves to be axially slidable while rotatably constrained to the pair of sleeves.

2. The rotary can beading apparatus of claim 1, wherein the pair of sleeves are axially spaced apart from each other.

3. The rotary can beading apparatus of claim 1, wherein a distance between inner axial ends of the pair of sleeves is 1/6 to 1/3 of a distance between outer axial ends of the pair of sleeves.

4. The rotary can beading apparatus of claim 1, wherein a ratio of axial lengths of the pair of sleeves is 0.9 to 1.1.

5. The rotary can beading apparatus of claim 1, wherein a distance between inner axial ends of the pair of sleeves is 1.0 to 2.0 times an average diameter of the shaft.

6. The rotary can beading apparatus of claim 1, further comprising: a plurality of bearings interposed between the case and the housing and supporting a rotation of the housing with respect to the case,
wherein the plurality of bearings are in contact with an outer circumference of the housing,
wherein the plurality of bearings are arranged between the case and the housing in a radial direction and axially spaced apart from each other, and
wherein an axial section of each of the sleeves in contact with an inner circumference of the housing at least partly overlaps with an axial section of each of the plurality of bearings in contact with the outer circumference of the housing.

7. The rotary can beading apparatus of claim 6, wherein at least a portion of the axial section where each of the plurality of bearings is in contact with the outer circumference of the housing is diposed beyond an axial section between the pair of sleeves.

8. The rotary can beading apparatus of claim 6, wherein at least a portion of an axial section between the pair of sleeves does not overlap with the axial section where each of the plurality of bearings is in contact with the outer circumference of the housing.

9. The rotary can beading apparatus of claim 6, wherein the case is provided with a through-hole connecting the first hollow portion to a space outside the housing, the through-hole is provided between two adjacent bearings in an axial direction, and a gas flow is configured to be forced between the first hollow portion and the space outside the case through the through-hole.

10. The rotary can beading apparatus of claim 1, wherein a shaft hole is provided at a center of the shaft, the shaft hole extending through the shaft in an axial direction, and a gas flow is configured to be forced in the axial direction through the shaft hole.
